# EUROPEAN PATENT APPLICATION

(11) **EP 4 625 388 A1**
(43) Date of publication of application: **01.10.2025**
(21) Application number: 23894282.5
(22) Date of filing: 10.10.2023
(51) Int. Cl.: G08G 1/16, B60K 35/23, B60W 30/12, B60W 50/10, B60W 50/14, B62D 6/00, B62D 101/00, B62D 117/00

(54) **DRIVING ASSISTANCE DEVICE, DRIVING ASSISTANCE METHOD, AND PROGRAM**

(30) Priority: 24.11.2022 JP 2022187793
(71) Applicant: TOYOTA JIDOSHA KABUSHIKI KAISHA, Toyota-shi Aichi 471-8571 (JP)
(72) Inventor: NOSE, Masashi, Toyota-shi, Aichi 471-8571 (JP); MIYAZAWA, Tomoaki, Toyota-shi, Aichi 471-8571 (JP); KUMAZAWA, Kazuya, Toyota-shi, Aichi 471-8571 (JP); TSUJINO, Miki, Toyota-shi, Aichi 471-8571 (JP); KITAZAWA, Tsukasa, Toyota-shi, Aichi 471-8571 (JP)
(74) Representative: J A Kemp LLP
(86) International application number: PCT/JP2023/036785
(87) International publication number: WO 2024/111270

(57) **Abstract**

A driving assistance device detects a travel position of a vehicle relative to a travel lane, conducts driving assistance that includes at least one of providing a report or steering assistance in a case in which the travel position of the vehicle satisfies a prescribed condition, and receives an instruction to change a degree of intervention of the driving assistance. In a case in which the driving assistance device receives the change instruction, the driving assistance device changes the degree of driving assistance intervention on the basis of the change instruction.

## Description

### Technical Field

The present disclosure relates to a driving assistance device, a driving assistance method, and a program.

### Background Art

Japanese Patent Application Laid-Open (JP-A) No. 2018-140646 discloses a head-up display device that displays a deviation direction when a vehicle may be deviating from a travel lane. More specifically, the head-up display device disclosed in JP-A No. 2018-140646 displays images of a pair of boundary lines representing boundaries of the travel lane and assists a driver by highlighting the boundary line at the side in the deviation direction to give a warning. Driving assistance devices and the like that conduct steering assistance when a vehicle is likely to deviate from a travel lane are also known.

### SUMMARY OF INVENTION

### Problem to be Solved by the Invention

However, with a device that assists drivers such as the head-up display device recited in JP-A No. 2018-140646, a driver cannot change a degree of driving assistance intervention. As a result, the driver may feel unease if the degree of driving assistance intervention is higher than expected by the driver or if the degree of driving assistance intervention is lower than expected.

The present disclosure provides a driving assistance device, driving assistance method and program that may conduct driving assistance while dispelling unease felt by a driver during driving.

### Means for Solving the Problem

A driving assistance device according to a first aspect including: detect a travel position of a host vehicle relative to a travel lane; conduct driving assistance that includes at least one of providing a report or steering assistance in a case in which the travel position of the host vehicle satisfies a prescribed condition; and in a case in which a change instruction to change a degree of intervention of the driving assistance is received, change the degree of driving assistance intervention on the basis of the change instruction.

The driving assistance device according to the first aspect performs driving assistance including one or both of a report and steering assistance when a travel position of the vehicle satisfies the prescribed condition. As a result, great deviation of the travel position of the vehicle from the travel lane may be suppressed.

In a case in which the driving assistance device receives a degree of driving assistance intervention change instruction, the driving assistance device changes the degree of driving assistance intervention in accordance with the change instruction. Therefore, the degree of driving assistance intervention may be changed to degrees that are suitable for respective drivers while keeping the driving assistance active. That is, when a driver feels that the driving assistance is annoying, the driving assistance device receives a change instruction for the degree of driving assistance intervention and lowers the degree of driving assistance intervention. Hence, without driving assistance functions becoming inactive, the driver is less likely to feel annoyed.

In a driving assistance device according to a second aspect, in the first aspect, the driving assistance includes at least one of providing a report or steering assistance in accordance with a distance between a pre-specified target travel path and the travel position.

When, for example, travel positions of the vehicle are likely to deviate greatly from the target travel path, the driving assistance device according to the second aspect performs driving assistance of one or both of a report and steering assistance. As a result, great deviation of the vehicle from the target travel path may be suppressed. The meaning of the term "target travel path" as used here is not limited to the middle of the travel lane but is intended to include a travel path that the vehicle is intended to travel along within the travel lane. When a travel lane is curved or the like, depending on conditions in the vicinity of the vehicle, the target travel path may include positions that are offset to either left or right from the middle of the travel lane.

In a driving assistance device according to a third aspect, in the second aspect, the driving assistance applies a steering force in a case in which the travel position is distant from the target travel path by at least a threshold value, and the steering force is larger when the degree of driving assistance intervention is higher.

When a driver changes the degree of driving assistance intervention, the driving assistance device according to the third aspect may change the steering force that is applied when the travel position is distant from the target travel path by more than the threshold value.

In a driving assistance device according to a fourth aspect, in the second aspect, the driving assistance applies a steering force in a case in which the travel position is distant from the target travel path by at least a threshold value, and the threshold value is smaller when the degree of driving assistance intervention is higher.

When a driver changes the degree of driving assistance intervention, the driving assistance device according to the fourth aspect may change a position at which the steering force is produced. In particular, the higher the degree of driving assistance intervention, the smaller the threshold value and thus, in contrast to when the degree of driving assistance intervention is lower, the steering force is applied even when the travel position is not greatly distant from the target travel path.

In a driving assistance device according to a fifth aspect, in the first aspect, the driving assistance includes at least one of providing a report or steering assistance in a case in which the travel position approaches a boundary line of the travel lane.

When, for example, the vehicle may be deviating from the travel lane, the driving assistance device according to the fifth aspect performs driving assistance of one or both of a report and steering assistance. As a result, deviation of the vehicle from the travel lane may be suppressed.

In a driving assistance device according to a sixth aspect, in the fifth aspect, the driving assistance applies a steering force in a case in which the travel position approaches the boundary line to the extent of at least a threshold value, and the steering force is larger when the degree of driving assistance intervention is higher.

When a driver changes the degree of driving assistance intervention, the driving assistance device according to the sixth aspect may change the steering force that is applied when there is a likelihood of deviating from the travel lane.

In a driving assistance device according to a seventh aspect, in the fifth aspect, the driving assistance applies a steering force in a case in which the travel position approaches the boundary line to the extent of at least a threshold value, and the threshold value is greater when the degree of driving assistance intervention is higher.

When a driver changes the degree of driving assistance intervention, the driving assistance device according to the seventh aspect may change a position at which the steering force is produced. In particular, the higher the degree of driving assistance intervention, the greater the threshold value and thus, in contrast to when the degree of driving assistance intervention is lower, the steering force is applied even when the travel position is distant from the boundary line.

In a driving assistance device according to an eighth aspect, in the fifth aspect, the driving assistance provides a report to a vehicle occupant in a case in which the travel position approaches the boundary line, and a timing of the report is earlier when the degree of driving assistance intervention is higher.

In the driving assistance device according to the eighth aspect, the higher the degree of driving assistance intervention, the earlier the timing of the report. Therefore, the report is given when the travel position is more distant from the boundary line than when the degree of driving assistance intervention is lower.

In a driving assistance device according to a ninth aspect, in the fifth aspect, the driving assistance provides a report to a vehicle occupant in a case in which the travel position approaches the boundary line, and an acoustic volume of the report is greater when the degree of driving assistance intervention is higher.

In the driving assistance device according to the ninth aspect, the report is given to the vehicle occupant when the travel position approaches the boundary line. The higher the degree of driving assistance intervention, the greater the volume of the report. Therefore, the driver is more likely to be made aware that the travel position is approaching the boundary line than when the degree of driving assistance intervention is lower.

In a driving assistance device according to a tenth aspect, in any one of the first to ninth aspects, when the driving assistance is active, display information relating to the driving assistance at a display region in a vehicle cabin; and change a display state of the information relating to the driving assistance in accordance with the degree of driving assistance intervention.

In the driving assistance device according to the tenth aspect, information relating to the driving assistance is displayed in the display region in the vehicle cabin. Thus, the driver may be made aware that the functions of the driving assistance are active. Because the display state of the information relating to the driving assistance changes in accordance with the degree of driving assistance intervention, the driver may intuitively understand the degree of driving assistance intervention just by seeing the display region.

In a driving assistance device according to an eleventh aspect, in the tenth aspect, when the driving assistance is active, display a stripe-shaped image in a region of the display region corresponding to the travel lane; and change at least one of a shade and a size of the image in accordance with the degree of driving assistance intervention.

With the driving assistance device according to the eleventh aspect, the driver may intuitively understand the degree of driving assistance intervention just by seeing the stripe-shaped image displayed in the region corresponding to the travel lane.

In a driving assistance device according to a twelfth aspect, in the tenth aspect, when the driving assistance is active, display a stripe-shaped image in a region corresponding to a boundary line of the travel lane; and change at least one of a shade and a size of the image in accordance with the degree of driving assistance intervention.

With the driving assistance device according to the twelfth aspect, the driver may intuitively understand the degree of driving assistance intervention just by seeing stripe-shaped images displayed in regions corresponding to boundary lines of the travel lane.

A driving assistance method according to a thirteenth aspect includes: detecting a travel position of a host vehicle relative to a travel lane; conducting driving assistance that includes at least one of providing a report or steering assistance in a case in which the travel position of the host vehicle satisfies a prescribed condition; and in a case in which a change instruction to change a degree of intervention of the driving assistance is received, changing the degree of driving assistance intervention on the basis of the change instruction.

A program according to a fourteenth aspect causes a computer to execute processing including: detecting a travel position of a host vehicle relative to a travel lane; conducting driving assistance that includes at least one of providing a report or steering assistance in a case in which the travel position of the host vehicle satisfies a prescribed condition; and in a case in which a change instruction to change a degree of intervention of the driving assistance is received, changing the degree of driving assistance intervention on the basis of the change instruction.

### ADVANTAGEOUS EFFECTS OF INVENTION

As described above, according to the driving assistance device, driving assistance method and program according to the present disclosure, unease felt by a driver during driving may be dispelled while driving assistance is being conducted.

### Brief Description of the Drawings

Fig. 1 is a schematic view of a front portion of a cabin interior of a vehicle in which a driving assistance device according to an exemplary embodiment is employed, viewed from the vehicle rear side.
Fig. 2 is a block diagram showing hardware structures of the driving assistance device according to the exemplary embodiment.
Fig. 3 is a block diagram showing functional structures of the driving assistance device according to the exemplary embodiment.
Fig. 4 is a view showing a display example of a display region according to the exemplary embodiment, which is a view of a state in which a degree of lane tracing assist intervention is low.
Fig. 5 is a view showing a display example of the display region according to the exemplary embodiment, which is a view of a state in which the degree of lane tracing assist intervention is high.
Fig. 6 is a view showing a display example of the display region according to the exemplary embodiment, which is a view of a state in which the degree of lane tracing assist intervention is low.
Fig. 7 is a view showing a display example of the display region according to the exemplary embodiment, which is a view of a state in which the degree of lane tracing assist intervention is high.
Fig. 8 is a view showing a display example of the display region according to the exemplary embodiment, which is a view of a state in which the degree of lane tracing assist intervention is low.
Fig. 9 is a view showing a display example of the display region according to the exemplary embodiment, which is a view of a state in which the degree of lane tracing assist intervention is high.
Fig. 10 is a view showing a display example of the display region according to the exemplary embodiment, which is a view of a state in which a degree of lane departure alert intervention is low.
Fig. 11 is a view showing a display example of the display region according to the exemplary embodiment, which is a view of a state in which the degree of lane departure alert intervention is high.
Fig. 12 is a view showing a display example of the display region according to the exemplary embodiment, which is a view of a state in which the degree of lane departure alert intervention is different between left and right.
Fig. 13 is a view showing a display example of the display region according to the exemplary embodiment, which is a view in which a lane departure alert warning is displayed.
Fig. 14 is a view showing a display example of the display region according to the exemplary embodiment, which is a view in which a lane departure alert warning is displayed.
Fig. 15 is a view showing a display example of the display region according to the exemplary embodiment, which is a view of a state in which the degrees of lane tracing assist and lane departure alert intervention are low.
Fig. 16 is a view showing a display example of the display region according to the exemplary embodiment, which is a view of a state in which the degrees of lane tracing assist and lane departure alert intervention are high.
Fig. 17 is a view showing a display example of the display region according to the exemplary embodiment, which is a view of a state in which the degrees of lane tracing assist and lane departure alert intervention are different.
Fig. 18 is a view showing a display example of the display region according to the exemplary embodiment, which is a view of a state in which the degrees of lane tracing assist and lane departure alert intervention are high.
Fig. 19 is a flowchart showing an example of a flow of driving assistance processing according to the exemplary embodiment.

### DESCRIPTION OF EMBODIMENTS

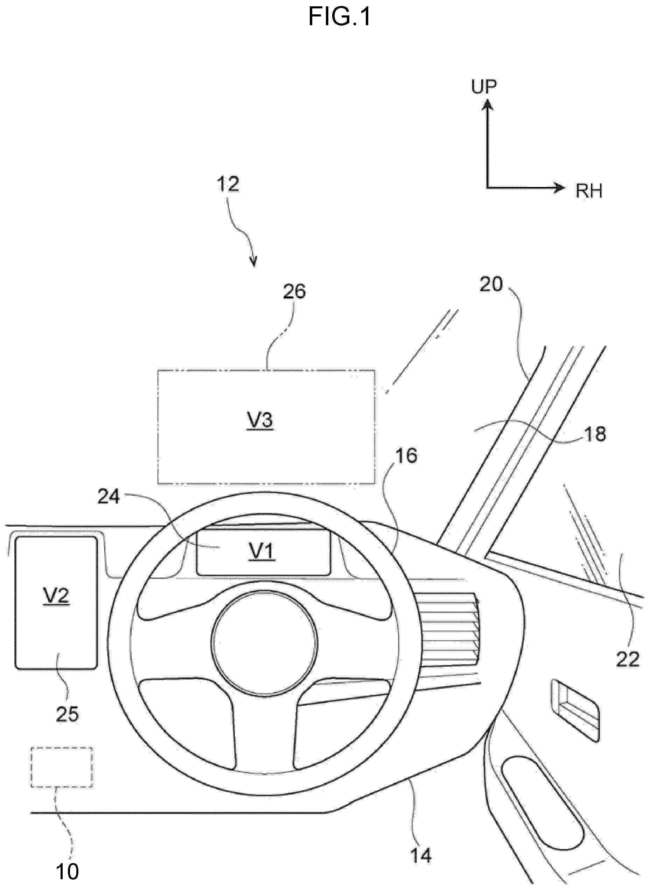

A vehicle 12 equipped with a driving assistance device 10 according to an exemplary embodiment is described with reference to the drawings. The arrow UP depicted in Fig. 1 indicates the upper side in a vehicle vertical direction and the arrow RH indicates the right side in a vehicle width direction. The vertical direction and left-and-right direction referred to in the descriptions below refer to, respectively, upper and lower in the vehicle vertical direction and left and right in the vehicle width direction.

As shown in Fig. 1, an instrument panel 14 is provided at a front portion of a cabin interior of the vehicle 12. The instrument panel 14 extends in the vehicle width direction, and a steering wheel 16 is provided at the vehicle right side of the instrument panel 14. That is, the present exemplary embodiment is an example of a right-hand drive car in which the steering wheel 16 is provided at the right side and a driver seat is set at the vehicle right side. However this is not limiting; the present exemplary embodiment may be applied to a vehicle in which the driver seat is set at the vehicle left side.

A windshield glass 18 is provided at a front end portion of the instrument panel 14. The windshield glass 18 extends in the vehicle vertical direction and the vehicle width direction, dividing the cabin interior from the cabin exterior.

A vehicle right side end portion of the windshield glass 18 is fixed to a vehicle right side front pillar 20. The front pillar 20 extends in the vehicle vertical direction, and the windshield glass 18 is fixed to a vehicle width direction inner side end portion of the front pillar 20. A front end portion of a front side glass 22 is fixed to a vehicle width direction outer side end portion of the front pillar 20. A vehicle left side end portion of the windshield glass 18 is fixed to a vehicle left side front pillar, which is not shown in the drawings.

A first display unit 24 equipped with an image display region V1 is provided at the instrument panel 14. The first display unit 24 is constituted by an instrument cluster display provided at the vehicle right side of the instrument panel 14 at the vehicle front of the driver seat. The first display unit 24 is connected with various instrument devices mounted in the vehicle 12. The first display unit 24 is provided at a position within a field of view of a driver in a state in which the eyeline of the driver is oriented to the vehicle front.

A second display unit 25 equipped with an image display region V2 is provided at the instrument panel 14. The second display unit 25 is structured by a center display screen provided at a central portion in the vehicle width direction of the instrument panel 14.

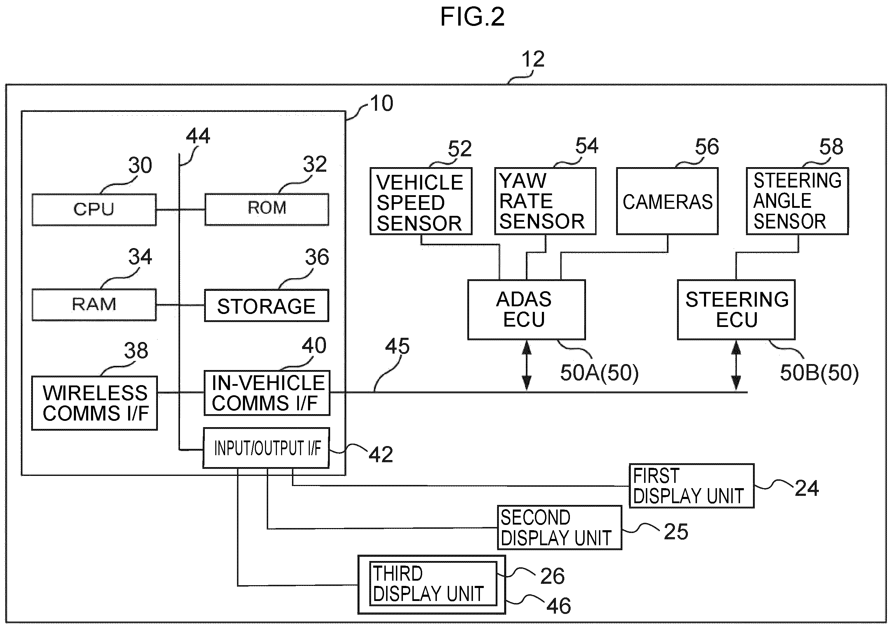

A third display unit 26 including an image display region V3 is provided at the windshield glass 18. The third display unit 26 is specified at the vehicle upper side relative to the first display unit 24. The third display unit 26 is constituted by a projection screen that is projected onto by a head-up display device 46 (see Fig. 2). Specifically, the head-up display device 46 that is capable of projecting images is provided at the vehicle front side of the instrument panel 14, and images are projected from the head-up display device 46 onto the third display unit 26 of the windshield glass 18. That is, the third display unit 26 is a portion of the windshield glass 18 that serves as the projection screen of the head-up display device 46.

The driving assistance device 10 is provided in the vehicle 12. The driving assistance device 10 according to the present exemplary embodiment is, for example, an electronic control unit (ECU) that performs various kinds of control.

### - Hardware structures of the driving assistance device 10 -

As shown in Fig. 2, the driving assistance device 10 includes a central processing unit (CPU) 30, read-only memory (ROM) 32, random access memory (RAM) 34, storage 36, a wireless communications interface (wireless comms I/F) 38, an in-vehicle communications interface (in-vehicle comms I/F) 40, and an input/output interface (input/output I/F) 42. These structures are connected to be capable of communicating with one another via an internal bus 44.

The CPU 30 is a central arithmetic processing unit that executes various programs and controls respective parts. That is, the CPU 30 reads a program from the ROM 32 or the storage 36, and executes the program using the RAM 34 as a workspace. The CPU 30 performs control of the structures described above and various kinds of computational processing in accordance with programs recorded in the ROM 32 or the storage 36.

The ROM 32 stores various programs and various kinds of data. The RAM 34 serves as a workspace, temporarily memorizing programs and data. The storage 36 is a non-transitory recording medium structured by a hard disk drive (HDD) or solid state drive (SSD). The storage 36 stores various programs, including an operating system, and various kinds of data. In the present exemplary embodiment, the ROM 32 or the storage 36 stores a program for implementing driving assistance processing and the like.

The wireless communications interface 38 is a wireless communications module for communicating with an external server and the like. This wireless communications module employs a communications standard such as, for example, 5G, LTE, Wi-Fi (registered trademark) or the like.

The in-vehicle communications interface 40 is an interface for connection with ECUs 50. This interface employs, for example, a communications standard based on the CAN protocol. The in-vehicle communications interface 40 is connected to an external bus 45.

The ECUs 50 include an advanced driver assistance systems (ADAS) ECU 50A and a steering ECU 50B. Although not shown in the drawings, a braking ECU, an engine ECU and the like are also included in the ECUs 50.

The ADAS ECU 50A conducts supervisory control of advanced driver assistance systems. The ADAS ECU 50A is connected to a vehicle speed sensor 52 that is capable of detecting speeds of the vehicle 12, a yaw rate sensor 54 that is capable of detecting yaw rates of the vehicle 12, and cameras 56. The cameras 56 include a front camera, rear camera and side cameras that image the vicinity of the vehicle 12. The cameras 56 also include a driver camera that is capable of detecting an eyeline direction of the driver. The driver camera is, for example, provided at the instrument panel 14 and disposed to be oriented toward the face of a vehicle occupant sitting on the driver seat (the driver). The driver camera detects the eyeline direction of the vehicle occupant by recognizing the eyes of the vehicle occupant and using the principles of a corneal reflex technique, a scleral reflex technique or the like.

The steering ECU 50B controls power steering. A steering angle sensor 58 is connected to the steering ECU 50B. The steering angle sensor 58 is a sensor that detects steering angles of the steering wheel 16.

The input/output interface 40 is connected with the first display unit 24, the second display unit 25 and the head-up display device 46. Images are projected onto the third display unit 26 by the head-up display device 46.

### - Functional structures of the driving assistance device 10 -

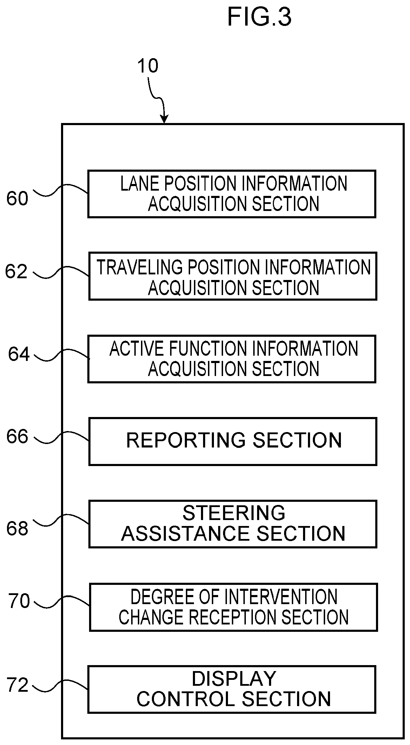

The driving assistance device 10 uses the hardware resources described above to realize various functions. The functional structures realized by the driving assistance device 10 are described with reference to Fig. 3.

As shown in Fig. 3, as functional structures, the driving assistance device 10 includes a lane position information acquisition section 60, a travel position information acquisition section 62, an active function information acquisition section 64, a reporting section 66, a steering assistance section 68, a degree of intervention change reception section 70, and a display control section 72. These functional structures are realized by the CPU 30 reading and executing a program memorized in the ROM 32 or storage 36.

The lane position information acquisition section 60 acquires position information of left and right boundary lines of a travel lane along which the vehicle 12 is traveling. More specifically, the lane position information acquisition section 60 identifies positions of the boundary lines on the basis of image data to the front of the vehicle 12 that is captured by the cameras 56. **In** the present exemplary embodiment, in addition to position information of the left and right boundary lines, the lane position information acquisition section 60 identifies types of the boundary lines. For example, from colors, line types and the like of the boundary lines, the lane position information acquisition section 60 identifies whether each of the left and right boundary lines is a center line or a lane boundary line.

The travel position information acquisition section 62 acquires information relating to travel positions of the vehicle 12 (a car) relative to the travel lane. More specifically, the travel position information acquisition section 62 calculates travel positions of the vehicle 12 relative to the travel lane on the basis of image data of the vicinity of the vehicle 12 captured by the cameras 56. The travel position information acquisition section 62 may refer to data received from a global positioning system (GPS) apparatus installed in the vehicle 12. When positioning accuracy of the vehicle 12 by the GPS apparatus is high, the travel position information acquisition section 62 may calculate the travel position of the vehicle 12 relative to the travel lane on the basis of the data from the GPS apparatus alone. The meaning of the term "information relating to travel positions of the vehicle 12 relative to the travel lane" may include, for example, coordinate data of the center of the vehicle 12 for which a width direction center of the travel lane is set as the origin point.

The active function information acquisition section 64 acquires information of driving assistance functions that are active among driving assistance functions installed in the vehicle 12. For example, the active function information acquisition section 64 may acquire information from the ADAS ECU 50A. **In** the descriptions below, lane tracing assist and lane departure alert are described as driving assistance functions; descriptions of other driving assistance functions are omitted.

The lane tracing assist referred to here is an assistance function for causing the vehicle 12 to travel on a target travel path along a travel lane. The lane tracing assist according to the present exemplary embodiment is set in advance with a threshold value for when to implement one or both of a report and steering assistance. When a difference between a travel position of the vehicle 12 and the target travel path exceeds the threshold value, the one or both of a report and steering assistance is implemented. The report to the driver is conducted by functioning of the reporting section 66, and the steering assistance is conducted by functioning of the steering assistance section 68. The target travel path according to the present exemplary embodiment is a travel path along the center of the travel lane, but this is not limiting. Positions of the target travel path that are offset from the center of the traveling line may be temporarily specified so as to aid travel through curves.

The present exemplary embodiment is configured such that a degree of lane tracing assist intervention can be changed. Details are described below.

The lane departure alert is an assistance function for suppressing deviation of the vehicle 12 from the lane. The lane departure alert according to the present exemplary embodiment is set in advance with a threshold value for when to implement one or both of a report and steering assistance. When a distance between the travel position of the vehicle 12 and a boundary line becomes less than the threshold value, the one or both of a report and steering assistance is implemented. The report to the driver is conducted by functioning of the reporting section 66, and the steering assistance is conducted by functioning of the steering assistance section 68.

The present exemplary embodiment is configured such that a degree of lane departure alert intervention can be changed. Details are described below.

The reporting section 66 provides a report to the driver when a prescribed condition is satisfied. For example, the reporting section 66 provides a voice report via a speaker in the vehicle cabin. More specifically, when the lane tracing assist is active and a difference between the travel position of the vehicle 12 and the target travel path exceeds the threshold value, the reporting section 66 reports to the driver that the travel position of the vehicle 12 is departing from the target travel path.

When the lane departure alert is active and a distance between the travel position of the vehicle 12 and a boundary line is less than the threshold value, the reporting section 66 reports to the driver that the vehicle 12 may be deviating from the travel lane.

The steering assistance section 68 conducts steering assistance by applying a steering force to the steering wheel 16 when a prescribed condition is satisfied. More specifically, when the lane tracing assist is active and a difference between the travel position of the vehicle 12 and the target travel path exceeds the threshold value, the steering assistance section 68 assists steering by applying a predetermined steering force to the steering wheel 16 so as to direct the vehicle 12 toward the target travel path.

When the lane departure alert is active and a distance between the travel position of the vehicle 12 and the boundary line becomes less than the threshold value, the steering assistance section 68 assists the steering such that the vehicle 12 does not deviate from the travel lane, by applying a predetermined steering force to the steering wheel 16. The steering assistance is implemented by the driving assistance device 10 sending commands to the steering ECU 50B.

The degree of intervention change reception section 70 receives degree of driving assistance intervention change instructions. When the degree of intervention change reception section 70 receives a degree of driving assistance intervention change instruction, the degree of intervention change reception section 70 changes a degree of driving assistance intervention in accordance with the change instruction.

For example, the degree of intervention change reception section 70 may receive a degree of intervention change when the driver operates an operation part in the vehicle cabin. As a further example, the degree of intervention change reception section 70 may receive a degree of intervention change by voice input or the like. As an example in the present exemplary embodiment, a degree of driving assistance intervention can be changed between two levels or three levels, but this is not limiting; the degree of driving assistance intervention may be changeable between four or more levels.

For the lane tracing assist, the higher the degree of driving assistance intervention, the smaller the threshold value. Therefore, when reporting by the reporting section 66 and steering assistance by the steering assistance section 68 are active, if the degree of intervention has been changed from lower to higher by the degree of intervention change reception section 70, the steering assistance and report are conducted even when a difference between the travel position of the vehicle 12 and the target travel path is small. Conversely, if the degree of intervention has been changed from higher to lower by the degree of intervention change reception section 70, the steering assistance and report are not conducted when a difference between the travel position of the vehicle 12 and the target travel path is small.

The lane tracing assist according to the present exemplary embodiment may be configured such that the higher the degree of driving assistance intervention, the greater the steering force. In this case, when the degree of intervention has been changed from lower to higher by the degree of intervention change reception section 70, a larger steering force is applied than when the degree of intervention is lower. Conversely, when the degree of intervention has been changed from higher to lower by the degree of intervention change reception section 70, the steering force applied to the steering wheel 16 is smaller than when the degree of intervention is higher.

The lane tracing assist according to the present exemplary embodiment may also be configured such that the higher the degree of driving assistance intervention, the greater the volume of a report sound given by the reporting section 66. In this case, when the degree of intervention has been changed from lower to higher by the degree of intervention change reception section 70, the report is given by a louder report sound than when the degree of intervention is lower. Conversely, when the degree of intervention has been changed from higher to lower by the degree of intervention change reception section 70, the volume of the report sound is quieter than when the degree of intervention is higher.

Meanwhile, for the lane departure alert, the higher the degree of driving assistance intervention, the greater the threshold value. Therefore, when reporting by the reporting section 66 and steering assistance by the steering assistance section 68 are active, if the degree of intervention has been changed from lower to higher by the degree of intervention change reception section 70, the steering assistance and report are conducted even when a distance between the travel position of the vehicle 12 and the boundary line is relatively large. Conversely, if the degree of intervention has been changed from higher to lower by the degree of intervention change reception section 70, the steering assistance and report are not conducted when a distance between the travel position of the vehicle 12 and the boundary line is relatively large.

The lane departure alert according to the present exemplary embodiment may be configured such that the higher the degree of driving assistance intervention, the greater the steering force. In this case, when the degree of intervention has been changed from lower to higher by the degree of intervention change reception section 70, a larger steering force is applied than when the degree of intervention is lower. Conversely, when the degree of intervention has been changed from higher to lower by the degree of intervention change reception section 70, the steering force applied to the steering wheel 16 is smaller than when the degree of intervention is higher.

The lane departure alert according to the present exemplary embodiment may also be configured such that the higher the degree of driving assistance intervention, the greater the volume of a report sound given by the reporting section 66. In this case, when the degree of intervention has been changed from lower to higher by the degree of intervention change reception section 70, the report is given by a louder report sound than when the degree of intervention is lower. Conversely, when the degree of intervention has been changed from higher to lower by the degree of intervention change reception section 70, the volume of the report sound is quieter than when the degree of intervention is higher.

When at least one of the driving assistance functions-the lane tracing assist and the lane departure alert-is active, the display control section 72 displays information relating to the driving assistance at a display region in the vehicle cabin.

The display control section 72 according to the present exemplary embodiment displays the information relating to driving assistance in the display region V3 of the third display unit 26, which is the projection screen projected by the head-up display device 46, but this is not limiting. The information may be displayed by the display control section 72 at the display region V1 of the first display unit 24 or the display region V2 of the second display unit 25.

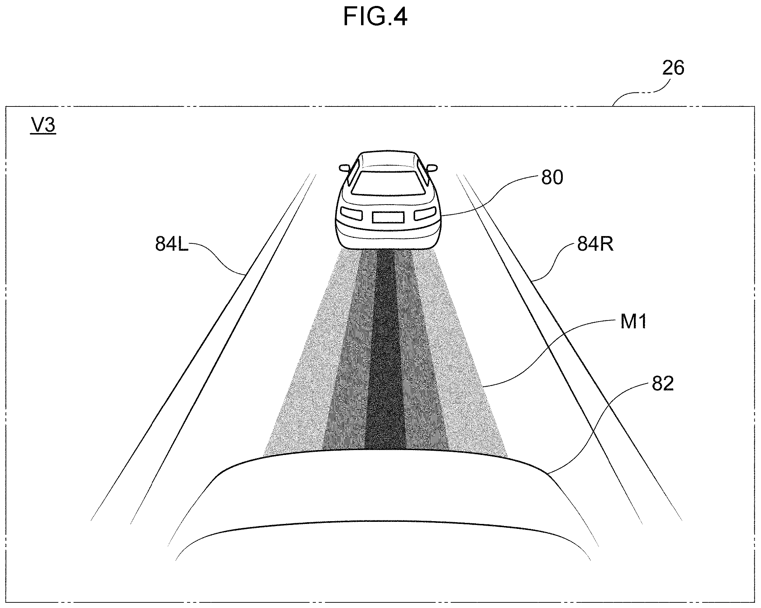

In the present exemplary embodiment, the display control section 72 changes display modes of the information relating to driving assistance in accordance with the degrees of driving assistance intervention. Below, display examples are described with reference to Fig. 4 to Fig. 18.

### - Display example 1 -

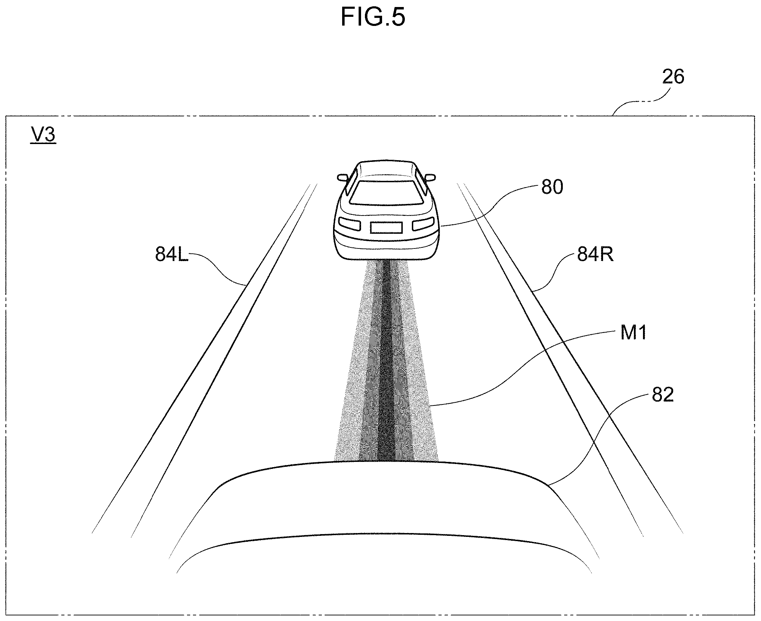

Fig. 4 is a view of a state in which the degree of lane tracing assist intervention is low, and Fig. 5 is a view of a state in which the degree of lane tracing assist intervention is high. As shown in Fig. 4, an image 80 portraying a preceding vehicle traveling in front is displayed in an upper portion of the display region V3. The image 80 is not displayed when no vehicle is traveling in front of the vehicle 12. The image 80 is displayed in the display region V3, for example, when another vehicle is traveling in the same travel lane as the vehicle 12 within a predetermined distance.

An image 82 portraying a front portion of the present vehicle is displayed in a lower portion of the display region V3. An image 84L portraying a boundary line of the travel lane is displayed at the left side of the present vehicle 82, and an image 84R portraying a boundary line of the travel lane is displayed at the right side of the present vehicle 82. In the descriptions below, the image 80, image 82, image 84L and image 84R are referred to as, respectively, a preceding vehicle 80, present vehicle 82, left boundary line 84L and right boundary line 84R.

In Fig. 4, a stripe-shaped image M1 is displayed linearly from the present vehicle 82 toward the preceding vehicle 80. The image M1 is displayed with gradations that are darker at a central portion than at left and right end portions. The image M1 is displayed when the lane tracing assist is active. In the present exemplary embodiment, the image M1 extends along the target travel path. Therefore, when traveling along a curve, the image M1 is displayed to bend along the curve. In the descriptions below, the image M1 is referred to as a target travel path M1 where appropriate. An image M2 and images M3 that are described below are similarly referred to as a target travel path M2 and target travel paths M3.

As shown in Fig. 4, when the degree of lane tracing assist intervention is low, the target travel path M1 is displayed to be relatively thick (large). More specifically, the target travel path M1 is displayed with a width approximately the same as a width of the preceding vehicle 80.

On the other hand, in a state in which the degree of lane tracing assist intervention is high, as illustrated in Fig. 5, the target travel path M1 is displayed to be thinner (smaller) than in Fig. 4. More specifically, the target travel path M1 is displayed with a narrow width. Thus, because the width of the target travel path M1 is displayed to be narrow, the driver intuitively understands that the degree of intervention is in a high state.

### - Display example 2 -

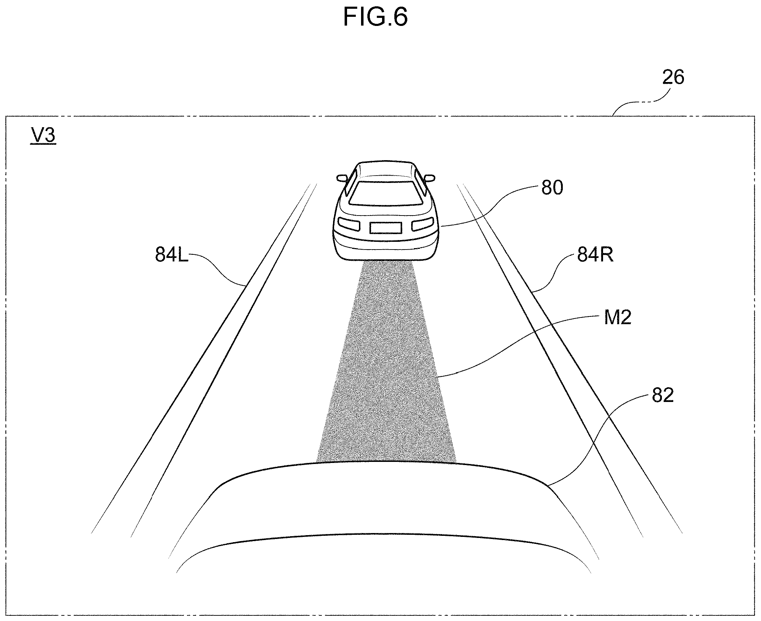

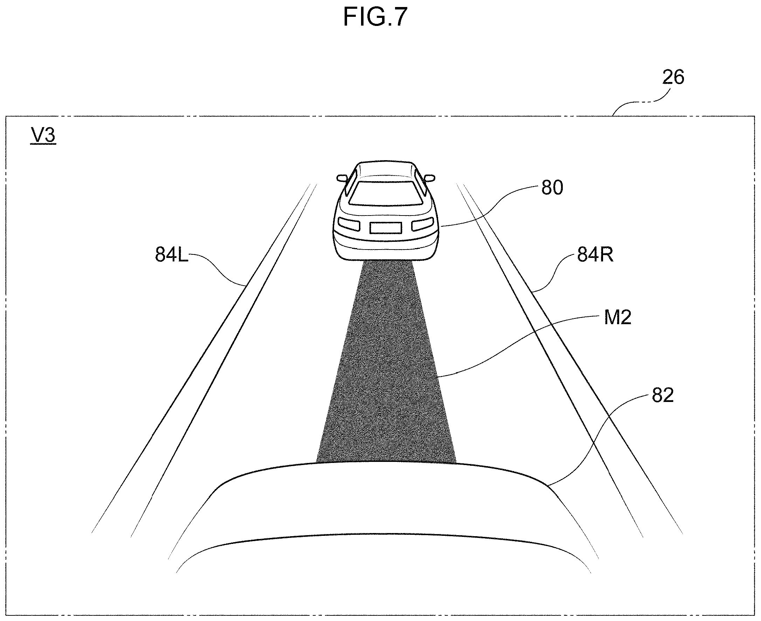

Fig. 6 is a view of a state in which the degree of lane tracing assist intervention is low, and Fig. 7 is a view of a state in which the degree of lane tracing assist intervention is high. As shown in Fig. 6, the stripe-shaped target travel path M2 is displayed linearly from the present vehicle 82 toward the preceding vehicle 80.

The target travel path M2 is displayed completely in a single color. This target travel path M2 is displayed when the lane tracing assist is active. In a state in which the degree of lane tracing assist intervention is low, as illustrated in Fig. 6, the target travel path M2 is displayed to be relatively pale. The target travel path M2 is displayed with a width approximately the same as the width of the preceding vehicle 80.

On the other hand, in a state in which the degree of lane tracing assist intervention is high, as illustrated in Fig. 7, the target travel path M2 is displayed to be darker than in Fig. 6. The target travel path M2 is displayed with the same width regardless of the degree of lane tracing assist intervention. That is, the degree of lane tracing assist intervention is expressed by a color shade without the width of the target travel path M2 being changed. Thus, when the color of the target travel path M2 is darker, the driver intuitively understands that the degree of intervention is in a higher state.

### - Display example 3 -

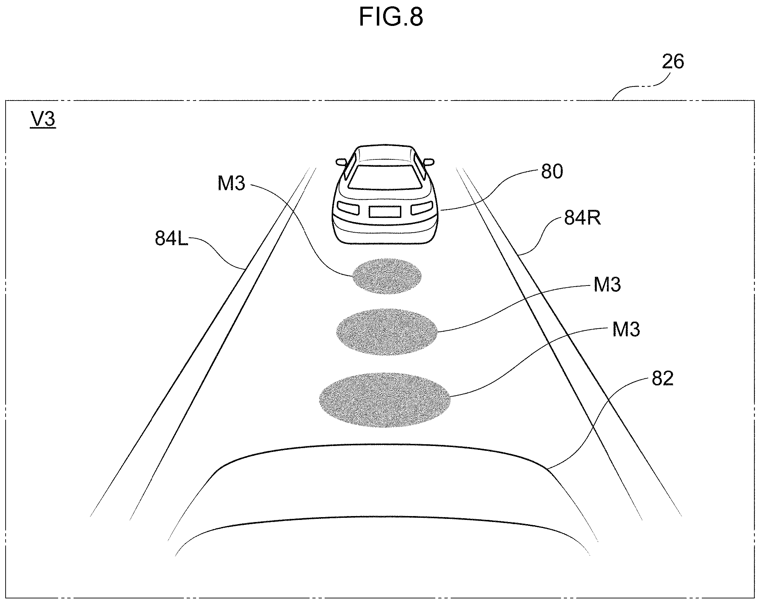

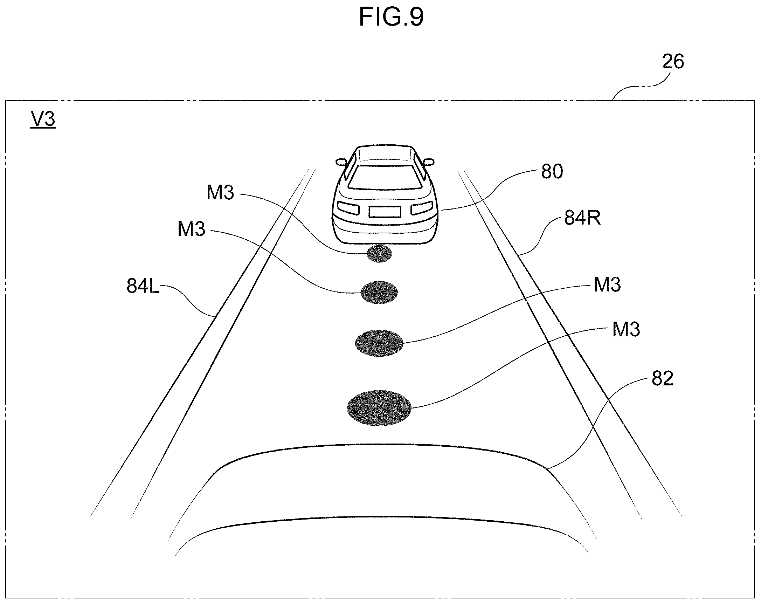

Fig. 8 is a view of a state in which the degree of lane tracing assist intervention is low, and Fig. 9 is a view of a state in which the degree of lane tracing assist intervention is high. As shown in Fig. 8, a plural number of the target travel path M3 in elliptical shapes are displayed from the present vehicle 82 toward the preceding vehicle 80. In the present example, three of the target travel paths M3 are displayed.

The plural target travel paths M3 are each displayed completely in a single color. The target travel paths M3 closer to the preceding vehicle 80 are displayed to be smaller. A sense of distance from the present vehicle 82 to the preceding vehicle 80 is expressed by the varied sizes of the target travel paths M3. The target travel paths M3 are displayed when the lane tracing assist is active. In a state in which the degree of lane tracing assist intervention is low, as illustrated in Fig. 8, the target travel paths M3 are displayed to be relatively large and pale.

On the other hand, in a state in which the degree of lane tracing assist intervention is high, as illustrated in Fig. 9, the target travel paths M3 are displayed to be smaller and darker than in Fig. 8. In the present example, four of these target travel paths M3 are displayed. Thus, in the present display example, when the sizes of the target travel paths M3 are smaller and the color is darker, the driver intuitively understands that the degree of intervention is in a higher state.

In the present example, both the sizes and densities of the target travel paths M3 are changed, but this is not limiting. For example, just the sizes of the target travel paths M3 may be changed in accordance with the degree of lane tracing assist intervention, or just the densities of the target travel paths M3 may be changed.

### - Display example 4 -

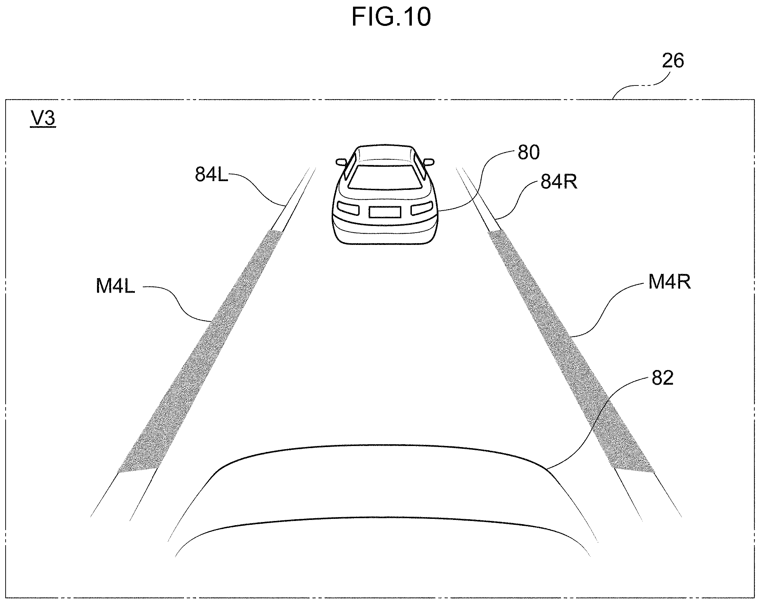

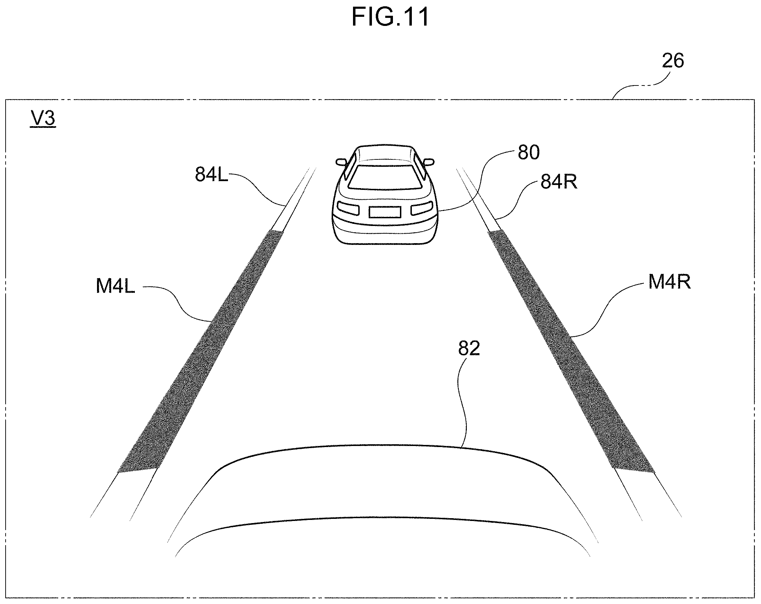

Fig. 10 is a view of a state in which the degree of lane departure alert intervention is low, and Fig. 11 is a view of a state in which the degree of lane departure alert intervention is high. As shown in Fig. 10, the preceding vehicle 80 traveling in front is displayed in the upper portion of the display region V3, and the present vehicle 82 is displayed in the lower portion of the display region V3.

The left boundary line 84L and right boundary line 84R are displayed, respectively, to left and right of the present vehicle 82. In Fig. 10, a stripe-shaped image M4L and image M4R are displayed so as to be superposed on portions of the left boundary line 84L and right boundary line 84R. The image M4L and image M4R are displayed when the lane departure alert is active.

The image M4L is displayed in the region between the present vehicle 82 and the preceding vehicle 80, and some or all of the image M4L is superposed on the left boundary line 84L. The image M4L is displayed completely in a single color and is displayed to be semitransparent such that the left boundary line 84L therebelow can be seen. Similarly, the image M4R is displayed in the region between the present vehicle 82 and the preceding vehicle 80, and some or all of the image MRL is superposed on the right boundary line 84R. The image M4R is displayed completely in a single color and is displayed to be semitransparent such that the right boundary line 84R therebelow can be seen. Where appropriate in the descriptions below, the image M4L and image M4R are referred to as, respectively, the left side boundary M4L and the right side boundary M4R.

In a state in which the degree of lane departure alert intervention is low, as illustrated in Fig. 10, the left side boundary M4L and right side boundary M4R are displayed to be relatively pale.

On the other hand, as shown in Fig. 11, in a state in which the degree of lane departure alert intervention is high, the left side boundary M4L and right side boundary M4R are displayed to be darker than in Fig. 10. Thus, because the left side boundary M4L and right side boundary M4R are displayed darker, the driver intuitively understands that the degree of intervention is in a higher state. In the present example, the left side boundary M4L and right side boundary M4R are displayed to be darker in accordance with the degree of lane departure alert intervention, but this is not limiting. Sizes of the left side boundary M4L and right side boundary M4R may also be changed. For example, the higher the degree of lane departure alert intervention, the larger the left side boundary M4L and right side boundary M4R may be displayed.

### - Display example 5 -

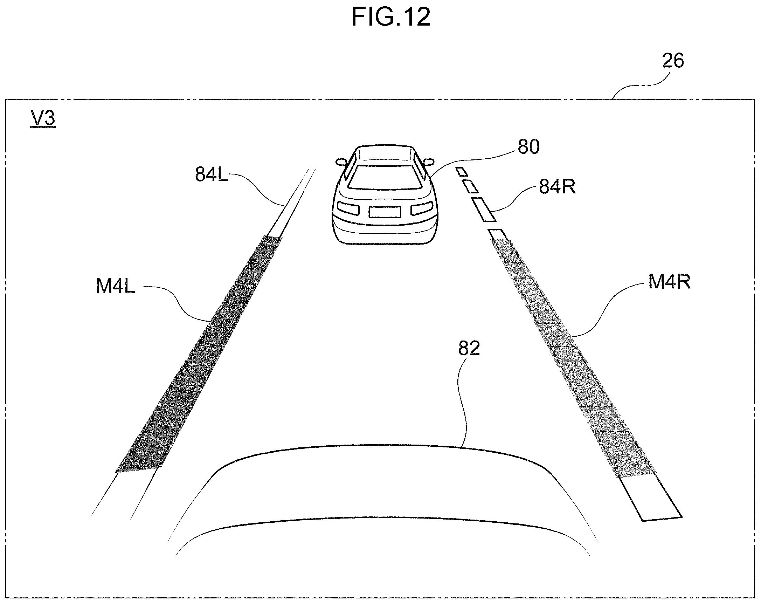

Fig. 12 is a view of a state in which the degree of lane departure alert intervention differs between left and right. As an example, Fig. 12 shows a situation in which the vehicle 12 is traveling along a travel path at the left side of a road with one lane each way, which is a situation in which the lane boundary line at the right side of the vehicle 12 is drawn as a broken line. In this situation, the right boundary line 84R is displayed in the display region V3 as a white broken line similar to an actual vehicle lane. Meanwhile, the left boundary line 84L is a boundary line of a roadside strip that the vehicle 12 is forbidden to enter.

In this state, when the degree of lane departure alert intervention is varied between left and right, the density may be varied as shown in Fig. 12. As shown in Fig. 12, the right side boundary M4R displayed at the right boundary line 84R is displayed to be relatively pale and the left side boundary M4L displayed at the left boundary line 84L is displayed to be relatively dark.

The densities of the left side boundary M4L and right side boundary M4R in Fig. 12 may be made the same, with the right side boundary M4R displayed at the right boundary line 84R being displayed to be relatively thick and the left side boundary M4L displayed at the left boundary line 84L being displayed to be relatively thin.

### - Display example 6 -

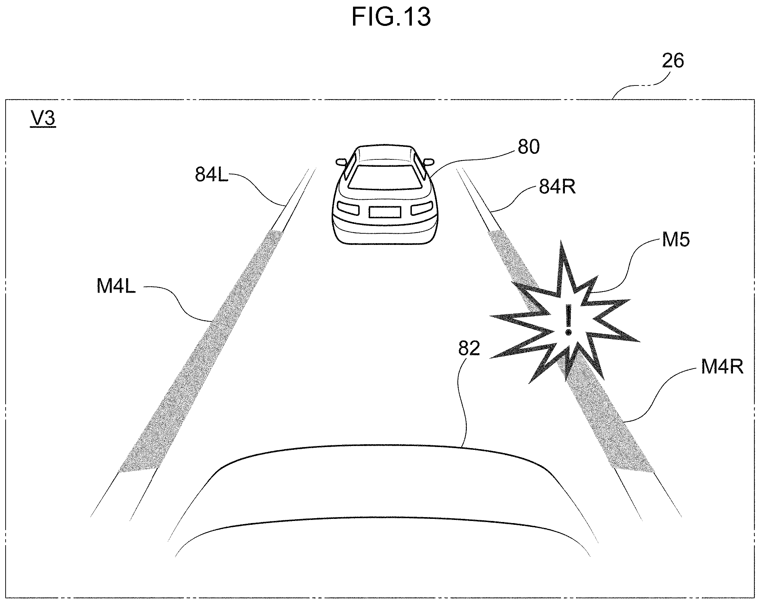

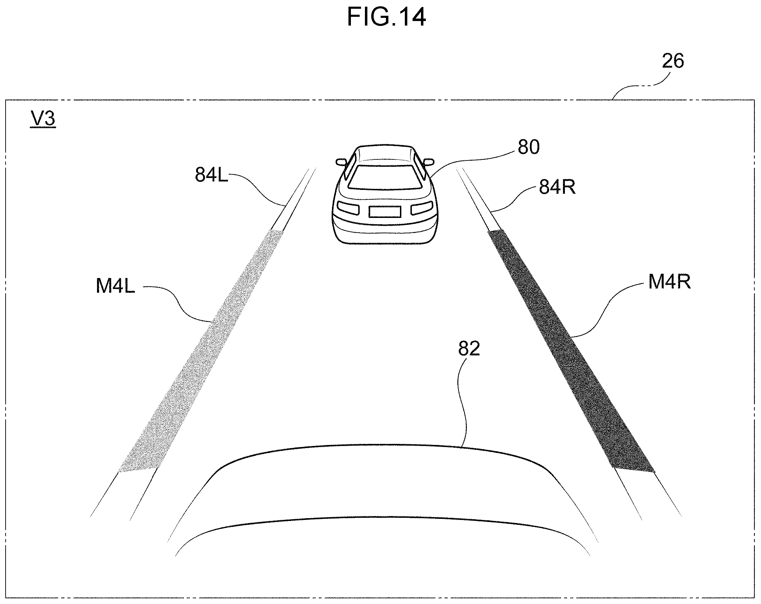

Fig. 13 and Fig. 14 are views of states in which lane departure alert warnings are displayed. As shown in Fig. 13, a warning image M5 is displayed at the right boundary line 84R. The image M5 is displayed, for example, when the vehicle 12 is highly likely to protrude into a lane at the right side and is not showing an indicator signal.

When the image M5 is displayed, the driver intuitively understands the high likelihood of protruding into the lane at the right side. This is not limited to cases in which steering assistance is not implemented by the lane departure alert. Even when the steering assistance is implemented, the image M5 can be displayed if the driver is steering the steering wheel 16 in the opposite direction to the direction of the steering assistance.

Alternatively, as shown in Fig. 14, an image in the direction in which the vehicle 12 is highly likely to protrude may be displayed to be dark. More specifically, when the vehicle 12 is highly likely to protrude into the lane at the right side, the right side boundary M4R is displayed to be darker than the left side boundary M4L. Further, the right side boundary M4R may be displayed to flash.

### - Display example 7 -

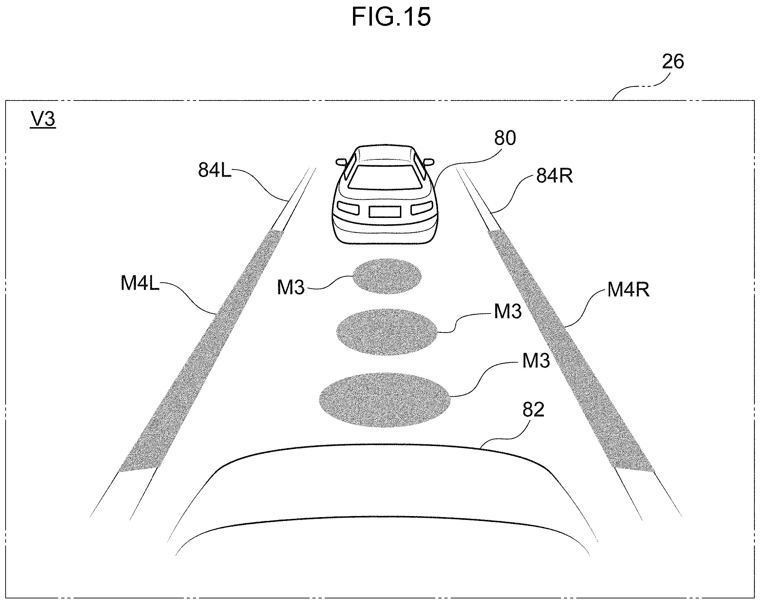

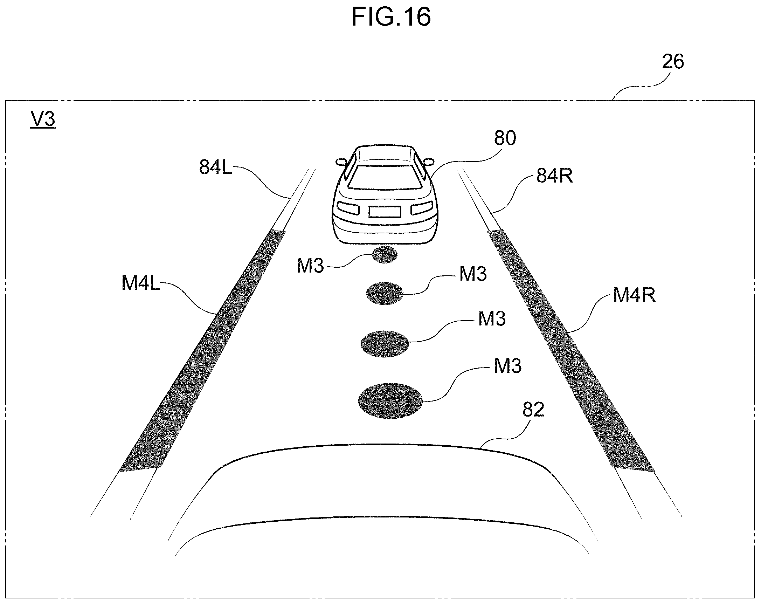

Fig. 15 is a view of a state in which the degrees of lane tracing assist and lane departure alert intervention are low, and Fig. 16 is a view of a state in which the degrees of lane tracing assist and lane departure alert intervention are high.

As shown in Fig. 15, when the functions of both the lane tracing assist and the lane departure alert are active, the target travel paths M3, the left boundary line 84L and the right boundary line 84R are displayed. In the state in which the degrees of lane tracing assist and lane departure alert intervention are low, all of the target travel paths M3, left side boundary M4L and right side boundary M4R are displayed to be relatively pale. In the state in which the functions of both the lane tracing assist and the lane departure alert are active, if, for example, the driver strongly steers the steering wheel 16 in opposition to steering assistance by the lane tracing assist or the like and the vehicle 12 approaches the boundary line of the travel lane, the steering assistance is conducted by the lane departure alert.

On the other hand, in the state in which the degrees of lane tracing assist and lane departure alert intervention are large, as shown in Fig. 16, all of the target travel paths M3, left side boundary M4L and right side boundary M4R are displayed to be relatively dark. The target travel paths M3 and the left side boundary M4L and right side boundary M4R may be displayed with respectively different densities depending on the respective degrees of lane tracing assist and lane departure alert intervention.

### - Display example 8 -

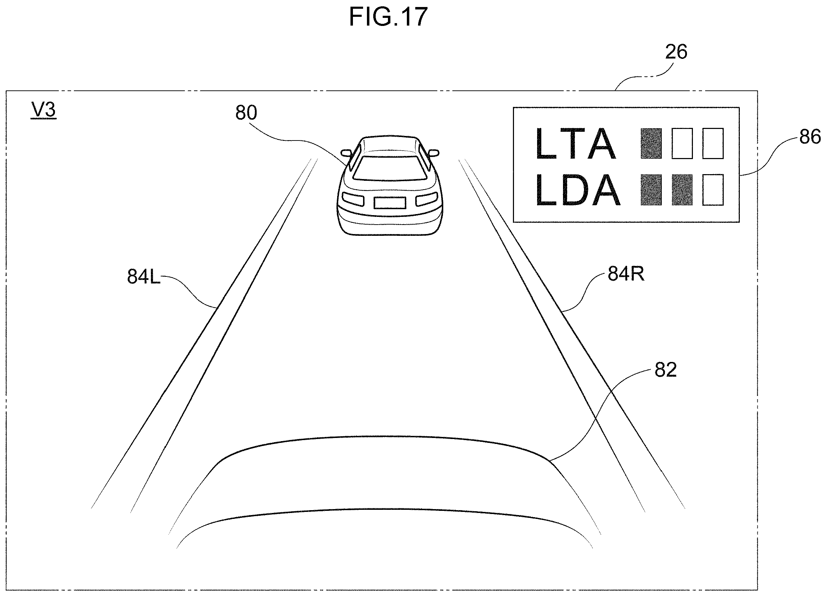

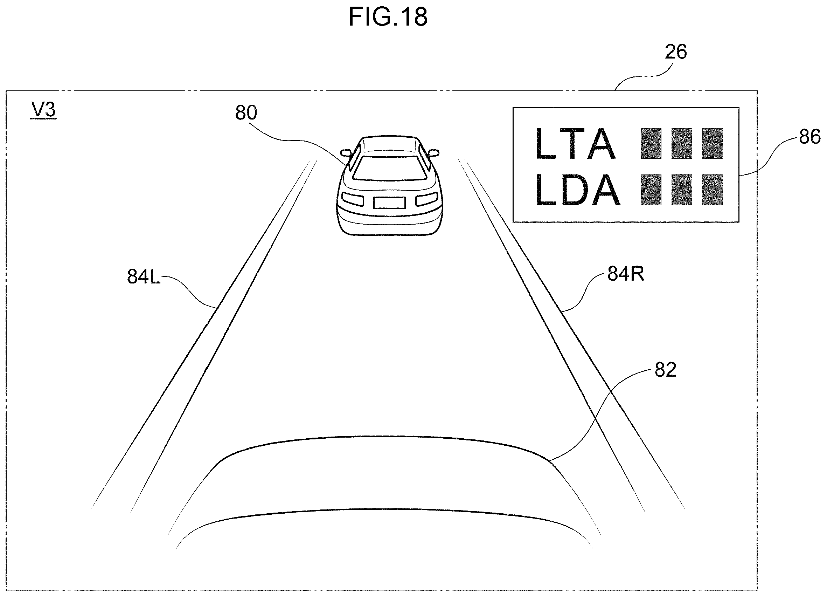

Fig. 17 is a view of a state in which the degrees of lane tracing assist and lane departure alert intervention are different, and Fig. 18 is a view of a state in which the degrees of lane tracing assist and lane departure alert intervention are high.

As shown in Fig. 17, in the present display example the target travel paths M3, left side boundary M4L and right side boundary M4R are not displayed. Instead, an image 86 representing the degrees of lane tracing assist and lane departure alert intervention is displayed at the upper right of the display region V3.

The degree of lane tracing assist intervention is displayed in the upper part of the image 86. More specifically, the characters "LTA" are displayed in the upper part of the image 86 and three boxes are arrayed to the right side of the characters. Of the three boxes, the box furthest to the left side is filled with color and the other boxes are displayed white. This indicates that the lane tracing assist can be changed between three levels and is in the state with the lowest degree of intervention.

The degree of lane departure alert intervention is displayed in the lower part of the image 86. More specifically, the characters "LDA" are displayed in the lower part of the image 86 and three boxes are arrayed to the right side of the characters. Of the three boxes, the box furthest to the left side and the box in the middle are filled with color and the box furthest to the right side is displayed white. This indicates that the lane departure alert can be changed between three levels and is in the state with the second highest degree of intervention.

On the other hand, in the state in which the degrees of lane tracing assist and lane departure alert intervention are high as shown in Fig. 18, all of the boxes in the image 86 are filled with color. Thus, the degrees of lane tracing assist and lane departure alert intervention are visually displayed next to one another and the degrees of intervention of both functions may be quickly understood.

### - Operation -

Now, operation of the present exemplary embodiment is described.

### - Display processing -

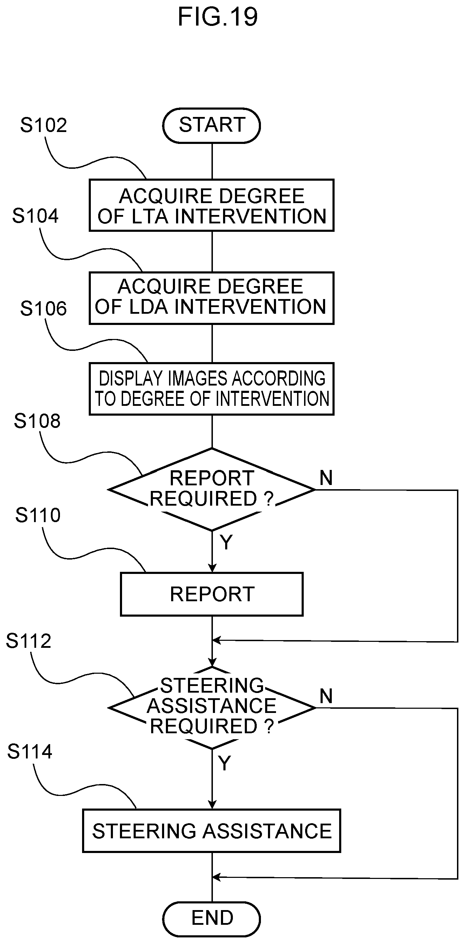

A sequence of processing for conducting driving assistance is described using the flowchart shown in Fig. 19. This display processing is implemented by the CPU 30 reading a display program from the ROM 32 or storage 36, loading the display program into the RAM 34, and executing the program. As an example, a vehicle that is capable of implementing both reports and steering assistance is described here.

In step S102, the CPU 30 acquires a degree of lane tracing assist (LTA) intervention. For example, when information relating to the degree of lane tracing assist intervention is memorized in the storage 36 or the like, the CPU 30 acquires the information relating to the degree of lane tracing assist intervention from the storage 36 or the like.

In step S104, the CPU 30 acquires a degree of lane departure alert (LDA) intervention. For example, when information relating to the degree of lane departure alert intervention is memorized in the storage 36 or the like, the CPU 30 acquires the information relating to the degree of lane departure alert intervention from the storage 36 or the like. Each time a degree of lane tracing assist or lane departure alert intervention is changed by the functioning of the degree of intervention change reception section 70, the information relating to the degree of intervention memorized at the storage 36 is changed, enabling a state in which the most recent information is memorized at the storage 36.

In step S106, the CPU 30 displays images according to the degrees of intervention. In this step, the CPU 30 specifies which driving assistance functions are active among the lane tracing assist and lane departure alert according to prior functioning of the active function information acquisition section 64, and displays images only for the functions that are active. For example, when only the lane tracing assist is active, by the functioning of the display control section 72, the CPU 30 displays any of the target travel paths M1 to M3 in the display region V3 (see Fig. 4 to Fig. 9).

As another example, when only the lane departure alert is active, by the functioning of the display control section 72, the CPU 30 displays the left side boundary M4L and right side boundary M4R in the display region V3 (see Fig. 10 to Fig. 14).

Further, when both the lane tracing assist and the lane departure alert are active, by the functioning of the display control section 72, the CPU 30 displays in the display region V3 that both the driving assistance functions are active (see Fig. 15 to Fig. 18).

In step S108, the CPU 30 makes a determination as to whether a report is required. More specifically, when the lane tracing assist is active and a difference between the travel position of the vehicle 12 and the target travel path exceeds a threshold value, the CPU 30 determines that a report is required. Further, when the lane departure alert is active and a distance between the travel position of the vehicle 12 and a boundary line is less than a threshold value, the CPU 30 determines that a report is required. When the CPU 30 determines in step S108 that a report is required, the CPU 30 proceeds to the processing of step S110. When the CPU 30 determines in step S108 that no report is required, the CPU 30 proceeds to the processing of step S112.

In step S110, the CPU 30 provides a report by a voice message through a speaker in the vehicle cabin. Details of the report are not particularly limited. For example, when the difference between the travel position of the vehicle 12 and the target travel path exceeds the threshold value, the report may be a voice message that the vehicle 12 is departing from the target travel path, or a warning noise or the like. When the distance between the travel position of the vehicle 12 and a boundary line is less than the threshold value, the report may be a voice message that the vehicle 12 is likely to protrude across the boundary line, or a warning noise or the like.

In step S112, the CPU 30 makes a determination as to whether steering assistance is required. More specifically, when the lane tracing assist is active and the difference between the travel position of the vehicle 12 and the target travel path exceeds a threshold value, the CPU 30 determines that steering assistance is required. Further, when the lane departure alert is active and the distance between the travel position of the vehicle 12 and the boundary line is less than a threshold value, the CPU 30 determines that steering assistance is required. The threshold values of the determinations in step S108 and step S112 may be different. For example, when the threshold value for a report by the lane tracing assist is different from the threshold value for steering assistance, there may be situations in which only the report is implemented and steering assistance is not implemented.

When the CPU 30 determines in step S112 that steering assistance is required, the CPU 30 proceeds to the processing of step S114. When the CPU 30 determines in step S112 that no steering assistance is required, the CPU 30 does not proceed to the processing of step S114 but ends the processing.

In step S114, by the functioning of the steering assistance section 68, the CPU 30 conducts steering assistance of the vehicle 12. That is, signals are sent from the driving assistance device 10 to the steering ECU 50B and the steering assistance is conducted by applying a predetermined steering force. The CPU 30 then ends the processing.

As described above, in the driving assistance device 10 according to the present exemplary embodiment, driving assistance including one or both of a report and steering assistance is conducted when a travel position of the vehicle 12 satisfies a prescribed condition. As a result, great deviation of the travel position of the vehicle 12 from a travel lane may be suppressed.

When the degree of intervention change reception section 70 receives a degree of driving assistance intervention change instruction, the degree of intervention change reception section 70 changes the degree of driving assistance intervention in accordance with the change instruction. Therefore, the degree of driving assistance intervention may be changed to degrees that are suitable for respective drivers while keeping the driving assistance active. That is, when a driver feels that driving assistance is annoying and lowers the degree of driving assistance intervention, without driving assistance functions becoming inactive, the driver is less likely to feel annoyed.

In the present exemplary embodiment, when, for example, a travel position of the vehicle 12 is likely to deviate greatly from the target travel path, the lane tracing assist conducts driving assistance for one or both of a report and steering assistance. As a result, great deviation of the vehicle from the target travel path may be suppressed.

In particular in the present exemplary embodiment, the driver may, by changing the degree of driving assistance intervention, change the steering force that is applied when the distance from the target travel path is at least the threshold value. Further, by changing the degree of driving assistance intervention, the driver may change a position at which the steering force is produced. For example, the higher the degree of driving assistance intervention, the smaller the threshold value and thus, in contrast to when the degree of driving assistance intervention is low, the steering force is applied even when the travel position is not greatly distant from the target travel path.

In the present exemplary embodiment, when, for example, the vehicle 12 is likely to deviate from a travel lane, the lane departure alert conducts driving assistance for one or both of a report and steering assistance. As a result, deviation of the vehicle 12 from the travel lane may be suppressed.

In particular in the present exemplary embodiment, the driver may, by changing the degree of driving assistance intervention, change the steering force that is applied when the vehicle 12 is likely to deviate from the travel lane. Further, by changing the degree of driving assistance intervention, the driver may change a position at which the steering force is produced. For example, the higher the degree of driving assistance intervention, the greater the threshold value and thus, in contrast to when the degree of driving assistance intervention is low, the steering force is applied even when the travel position is distant from the boundary line. Moreover, when the degree of driving assistance intervention is higher, the report is given at an earlier timing. Consequently, in contrast to when the degree of driving assistance intervention is low, the report is given even when the travel position is distant from the boundary line.

In the present exemplary embodiment, a report is given to the vehicle occupant when a travel position approaches a boundary line. In the present exemplary embodiment, the higher the degree of driving assistance intervention, the greater the volume of the report. Therefore, the driver is more likely to be made aware that the travel position is approaching the boundary line than when the degree of driving assistance intervention is low.

In the present exemplary embodiment, because information relating to driving assistance is displayed in the display region V3 in the vehicle cabin, the driver may be made aware that the functions of the driving assistance are active. Because the display state of the information relating to the driving assistance changes in accordance with the degree of driving assistance intervention, the driver may intuitively understand the degree of driving assistance intervention just by seeing the display region. For example, the driver may intuitively understand the degree of driving assistance intervention just by seeing the target travel path M1 to M3 displayed in the region corresponding to the travel lane. Furthermore, the driver may intuitively understand the degree of driving assistance intervention just by seeing the left side boundary M4L and right side boundary M4R displayed in the regions corresponding to the boundary lines of the travel lane.

The driving assistance device 10 according to the exemplary embodiment is described above but it will be clear that numerous embodiments are possible within a scope not departing from the gist of the present disclosure. For example, the exemplary embodiment described above is configured to conduct a report or steering assistance in accordance with a distance between a pre-specified target travel path and a travel position, but this is not limiting. A configuration is possible that only provides reports as driving assistance, and a configuration is possible that only conducts steering assistance as driving assistance.

The exemplary embodiment described above is configured to conduct a report or steering assistance when a travel position of the vehicle 12 approaches a boundary line of a travel lane, but this is not limiting. A configuration is possible that only provides reports as driving assistance, and a configuration is possible that only conducts steering assistance as driving assistance.

In the exemplary embodiment described above, as shown in Fig. 3 and Fig. 4, the target travel path M1 is displayed to be thicker (larger) when the degree of driving assistance intervention is lower and is displayed to be narrower (smaller) when the degree of intervention is higher, but this is not limiting. For example, the target travel path M1 may be displayed to be narrower when the degree of driving assistance intervention is lower and the target travel path M1 may be displayed to be thicker when the degree of intervention is higher.

In the exemplary embodiment described above, when the degree of driving assistance intervention is higher, the volume of a report given by the reporting section 66 is louder, but this is not limiting. For example, rather than changing the volume, sound with a higher frequency may be outputted when the degree of driving assistance intervention is higher. Outputting sound with a higher frequency may better attract the attention of the driver.

In the exemplary embodiment described above, as shown in Fig. 4 to Fig. 9, the target travel path M1, target travel path M2 or target travel paths M3 is displayed between the preceding vehicle 80 and present vehicle 82 displayed in the display region V3, but this is not limiting. The target travel path M1, target travel path M2 or target travel paths M3 may be displayed using an augmented reality head-up display (AR-HUD) that is capable of adjusting display positions in accordance with the viewpoint of a driver. In this case, the target travel path M1, target travel path M2 or target travel path M3 may be displayed superposed on an actual road seen through the windshield glass 18.

Similarly in the exemplary embodiment described above, as shown in Fig. 10 to Fig. 16, the left side boundary M4L and right side boundary M4R are displayed over the left boundary line 84L and right boundary line 84R displayed in the display region V3, but this is not limiting. The left side boundary M4L and right side boundary M4R may be displayed using an AR-HUD. In this case, the left side boundary M4L and right side boundary M4R may be displayed superposed on an actual lane seen through the windshield glass 18.

The processing that, in the exemplary embodiment described above, is executed by the CPU 30 reading a program may be executed by various kinds of processor other than the CPU 30. Examples of processors in these cases include a PLD (programmable logic device) in which a circuit configuration can be modified after fabrication, such as an FPGA (field programmable gate array) or the like, a dedicated electronic circuit which is a processor with a circuit configuration that is specially designed to execute specific processing, such as an ASIC (application-specific integrated circuit) or the like, and so forth. The above processing may be executed by one of these various kinds of processors, and may be executed by a combination of two or more processors of the same or different kinds, for example, plural FPGAs, a combination of a CPU with an FPGA, or the like. Hardware structures of these various kinds of processors are, to be more specific, electronic circuits combining circuit components such as semiconductor components and the like.

The exemplary embodiment described above has a configuration in which various kinds of data are memorized in the storage 36, but this is not limiting. For example, a non-transitory recording medium, such as a CD-ROM (compact disc read-only memory), DVD-ROM (digital versatile disc read-only memory), USB (universal serial bus) memory or the like, may be used as a memory unit. In this case, various programs, data and the like are stored at this recording medium.

The flow of processing described in the above exemplary embodiment is an example. Unnecessary steps may be removed, new steps may be added, and processing sequences may be rearranged within a scope not departing from the gist of the disclosure. For example, in the exemplary embodiment described above as shown in Fig. 19, processing that implements displays in the display region and processing that conducts driving assistance are described as one sequence of processing, but this is not limiting. Display processing that implements displays in accordance with degrees of driving assistance intervention and driving assistance processing that conducts driving assistance in accordance with degrees of driving assistance intervention may be separate processes. Further, processing for lane tracing assist and processing for lane departure alert may be separate processes. Further still, processing to give reports and processing to perform steering assistance may be separate processes.
The disclosures of Japanese Patent Application No. 2022-187793 are incorporated into the present specification by reference in their entirety.
All references, patent applications and technical specifications cited in the present specification are invoked and incorporated into the present specification to the same extent as if the individual references, patent applications and technical specifications were specifically and individually recited as being incorporated by reference.

## Claims

1. A driving assistance device, comprising:
detect a travel position of a host vehicle relative to a travel lane;
conduct driving assistance that includes at least one of providing a report or steering assistance in a case in which the travel position of the host vehicle satisfies a prescribed condition; and
in a case in which a change instruction to change a degree of intervention of the driving assistance is received, change the degree of driving assistance intervention on the basis of the change instruction.

2. The driving assistance device according to claim 1, wherein the driving assistance includes at least one of providing a report or steering assistance in accordance with a distance between a pre-specified target travel path and the travel position.

3. The driving assistance device according to claim 2, wherein:
the driving assistance applies a steering force in a case in which the travel position is distant from the target travel path by at least a threshold value, and
the steering force is larger when the degree of driving assistance intervention is higher.

4. The driving assistance device according to claim 2, wherein:
the driving assistance applies a steering force in a case in which the travel position is distant from the target travel path by at least a threshold value, and
the threshold value is smaller when the degree of driving assistance intervention is higher.

5. The driving assistance device according to claim 1, wherein the driving assistance includes at least one of providing a report or steering assistance in a case in which the travel position approaches a boundary line of the travel lane.

6. The driving assistance device according to claim 5, wherein:
the driving assistance applies a steering force in a case in which the travel position approaches the boundary line to the extent of at least a threshold value, and
the steering force is larger when the degree of driving assistance intervention is higher.

7. The driving assistance device according to claim 5, wherein:
the driving assistance applies a steering force in a case in which the travel position approaches the boundary line to the extent of at least a threshold value, and
the threshold value is greater when the degree of driving assistance intervention is higher.

8. The driving assistance device according to claim 5, wherein:
the driving assistance provides a report to a vehicle occupant in a case in which the travel position approaches the boundary line, and
a timing of the report is earlier when the degree of driving assistance intervention is higher.

9. The driving assistance device according to claim 5, wherein:
the driving assistance provides a report to a vehicle occupant in a case in which the travel position approaches the boundary line, and
an acoustic volume of the report is greater when the degree of driving assistance intervention is higher.

10. The driving assistance device according to any one of claims 1 to 9, wherein:
when the driving assistance is active, display information relating to the driving assistance at a display region in a vehicle cabin; and
change a display state of the information relating to the driving assistance in accordance with the degree of driving assistance intervention.

11. The driving assistance device according to claim 10, wherein:
when the driving assistance is active, display a stripe-shaped image in a region of the display region corresponding to the travel lane; and
change at least one of a shade or a size of the image in accordance with the degree of driving assistance intervention.

12. The driving assistance device according to claim 10, wherein:
when the driving assistance is active, display a stripe-shaped image in a region corresponding to a boundary line of the travel lane; and
change at least one of a shade or a size of the image in accordance with the degree of driving assistance intervention.

13. A driving assistance method, comprising:
detecting a travel position of a host vehicle relative to a travel lane;
conducting driving assistance that includes at least one of providing a report or steering assistance in a case in which the travel position of the host vehicle satisfies a prescribed condition; and
in a case in which a change instruction to change a degree of intervention of the driving assistance is received, changing the degree of driving assistance intervention on the basis of the change instruction.

14. A program for causing a computer to execute processing comprising:
detecting a travel position of a host vehicle relative to a travel lane;
conducting driving assistance that includes at least one of providing a report or steering assistance in a case in which the travel position of the host vehicle satisfies a prescribed condition; and
in a case in which a change instruction to change a degree of intervention of the driving assistance is received, changing the degree of driving assistance intervention on the basis of the change instruction.

## Amended claims

### Amended claims under Art. 19.1 PCT

**1.** A driving assistance device, configured to:
detect a travel position of a host vehicle relative to a travel lane;
conduct driving assistance that includes at least one of providing a report or steering assistance in a case in which the travel position of the host vehicle satisfies a prescribed condition; and
in a case in which a change instruction to change a degree of intervention of the driving assistance is received, change the degree of driving assistance intervention on the basis of the change instruction;
when the driving assistance is active, display information relating to the driving assistance at a display region in a vehicle cabin; and
change a display state of the information relating to the driving assistance in accordance with the degree of driving assistance intervention.

**2.** The driving assistance device according to claim 1, wherein the driving assistance includes at least one of providing a report or steering assistance in accordance with a distance between a pre-specified target travel path and the travel position.

**3.** The driving assistance device according to claim 2, wherein
the driving assistance applies a steering force in a case in which the travel position is distant from the target travel path by at least a threshold value, and
the steering force is larger when the degree of driving assistance intervention is higher.

**4.** The driving assistance device according to claim 2, wherein
the driving assistance applies a steering force in a case in which the travel position is distant from the target travel path by at least a threshold value, and
the threshold value is smaller when the degree of driving assistance intervention is higher.

**5.** The driving assistance device according to claim 1, wherein the driving assistance includes at least one of providing a report or steering assistance in a case in which the travel position approaches a boundary line of the travel lane.

**6.** The driving assistance device according to claim 5, wherein
the driving assistance applies a steering force in a case in which the travel position approaches the boundary line to the extent of at least a threshold value, and
the steering force is larger when the degree of driving assistance intervention is higher.

**7.** The driving assistance device according to claim 5, wherein
the driving assistance applies a steering force in a case in which the travel position approaches the boundary line to the extent of at least a threshold value, and
the threshold value is greater when the degree of driving assistance intervention is higher.

**8.** The driving assistance device according to claim 5, wherein
the driving assistance provides a report to a vehicle occupant in a case in which the travel position approaches the boundary line, and
a timing of the report is earlier when the degree of driving assistance intervention is higher.

**9.** The driving assistance device according to claim 5, wherein
the driving assistance provides a report to a vehicle occupant in a case in which the travel position approaches the boundary line, and
an acoustic volume of the report is greater when the degree of driving assistance intervention is higher.

**10.** Deleted)

**11.** The driving assistance device according to claim 1, wherein:
when the driving assistance is active, display a stripe-shaped image in a region of the display region corresponding to the travel lane; and
change at least one of a shade or a size of the image in accordance with the degree of driving assistance intervention.

**12.** The driving assistance device according to claim 1, wherein:
when the driving assistance is active, display a stripe-shaped image in a region corresponding to a boundary line of the travel lane; and
change at least one of a shade or a size of the image in accordance with the degree of driving assistance intervention.

**13.** A driving assistance method comprising:
detecting a travel position of a host vehicle relative to a travel lane;
conducting driving assistance that includes at least one of providing a report and steering assistance in a case in which the travel position of the host vehicle satisfies a prescribed condition; and
in a case in which a change instruction to change a degree of intervention of the driving assistance is receive, changing the degree of driving assistance intervention on the basis of the change instruction;
when the driving assistance is active, displaying information relating to the driving assistance at a display region in a vehicle cabin; and
changing a display state of the information relating to the driving assistance in accordance with the degree of driving assistance intervention.

**14.** A program for causing a computer to execute processing comprising:
detecting a travel position of a host vehicle relative to a travel lane;
conducting driving assistance that includes at least one of providing a report or steering assistance in a case in which the travel position of the host vehicle satisfies a prescribed condition; and
in a case in which a change instruction to change a degree of intervention of the driving assistance is receive, changing the degree of driving assistance intervention on the basis of the change instruction;
when the driving assistance is active, displaying information relating to the driving assistance at a display region in a vehicle cabin; and
changing a display state of the information relating to the driving assistance in accordance with the degree of driving assistance intervention.
